# EUROPÄISCHE PATENTANMELDUNG

(11) **EP 1 122 523 A1**
(43) Veröffentlichungstag der Anmeldung: **08.08.2001**
(21) Anmeldenummer: 01890015.9
(22) Anmeldetag: 22.01.2001
(51) Int. Cl.: G01G 19/18

(54) **Hängebahnwaage**

(30) Priorität: 24.01.2000 AT 392000 U
(71) Anmelder: Bizerba-Waagen Ges. m.b.H. &Co. KG., 1239 Wien (AT)
(72) Erfinder: Schlawa, Manfred, Dipl.-Ing., 1239 Wien (AT)
(74) Vertreter: Rippel, Andreas, Dipl.-Ing.

(57) **Zusammenfassung**

Eine Hängebahnwaage, bestehend aus einer rohrförmigen Wägeschiene, die zwischen einer von Haken befahrbaren Rohrbahn angeordnet und im Bereich ihrer Enden auf Wägezellen abgestützt ist.

Die Wägeschiene ist über Lager, insbesondere Wälzlager, drehbar auf den Wägezellen abgestützt. Dadurch wird die Übertragung von Drehmomenten auf die Wägezellen vermieden.

## Beschreibung

Die Erfindung bezieht sich auf eine Hängebahnwaage, bestehend aus einer rohrförmigen Wägeschiene, die zwischen einer von Haken befahrbaren Rohrbahn angeordnet und im Bereich ihrer Enden auf Wägezellen abgestützt ist.

Bei derartigen Hängebahnwaagen besteht das Problem, daß zur Erreichung einwandfreier Meßergebnisse bei einfacher Justierung verhältnismäßig teure Wägezellen verwendet werden müssen. Der Grund hierfür liegt darin, daß nur solche Wägezellen unempfindlich gegenüber einer Torsionsbeanspruchung sind. Zufolge der zwischen den bewegten Haken und der Rohrbahn bzw. der Wägeschiene bestehenden Reibung und der wegen der unterschiedlichen Aufhängung und Form der Lasten, insbesondere Tierteile, wirken jedoch auf die Haken und damit die Wägeschiene auch unterschiedliche Torsionskräfte ein.

Die Erfindung hat es sich zum Ziel gesetzt, eine Hängebahnwaage der eingangs genannten Art zu schaffen, bei der einfachere und damit billigere Wägezellen verwendet werden können, ohne daß die genannten Nachteile auftreten. Erreicht wird dies dadurch, daß die Wägeschiene über Lager, insbesondere Wälzlager, frei drehbar und antriebslos auf den Wägezellen abgestützt ist.

Bei einer erfindungsgemäßen Hängebahnwaage werden von der Wägeschiene keine Torsionsbeanspruchungen auf die Wägezellen übertragen, bei von Haken ausgeübten Drehmomenten dreht sich die Wägeschiene entsprechend. Es tritt keine Verschiebung des Kraftangriffspunktes ein, die Lasten befinden sich immer in der selben Schwerachse.

Zweckmäßig sind die Lager Pendelkugellager. Dadurch werden einerseits Montageungenauigkeiten ausgeglichen, andererseits Biegebeanspruchungen aufgenommen. Es werden keine Momente auf die Wägezellen übertragen.

Um eine Unabhängigkeit von der Tragkonstruktion der Rohrbahn zu erreichen, sind bei einem bevorzugten Ausführungsbeispiel der Erfindung die Wägezellen auf Konsolen befestigt, die von den beiden Enden der Rohrbahn nach innen ragen.

Die Konsolen sind über ein Trägerrohr miteinander verbunden und mit der Unterseite der Rohrbahnenden verschraubt. Dadurch wird eine Vormontage der Hängebahnwaage sowie eine einfache Befestigung ermöglicht.

Die Montage wird auch dadurch erleichtert, daß die Außenringe der Wälzlager mit den Wägezellen verschraubt sind.

Nachstehend ist die Erfindung anhand eines in den Zeichnungen dargestellten Ausführungsbeispieles näher beschrieben, ohne auf dieses Beispiel beschränkt zu sein. Dabei zeigt die Fig. 1 eine Vorderansicht , die Fig. 2 eine Seitenansicht und die Fig. 3 eine Draufsicht einer erfindungsgemäßen Hängebahnwaage. Die Fig. 4 und 5 veranschaulichen mittels Explosionszeichnungen die Montage der Hängebahnwaage nach der Erfindung.

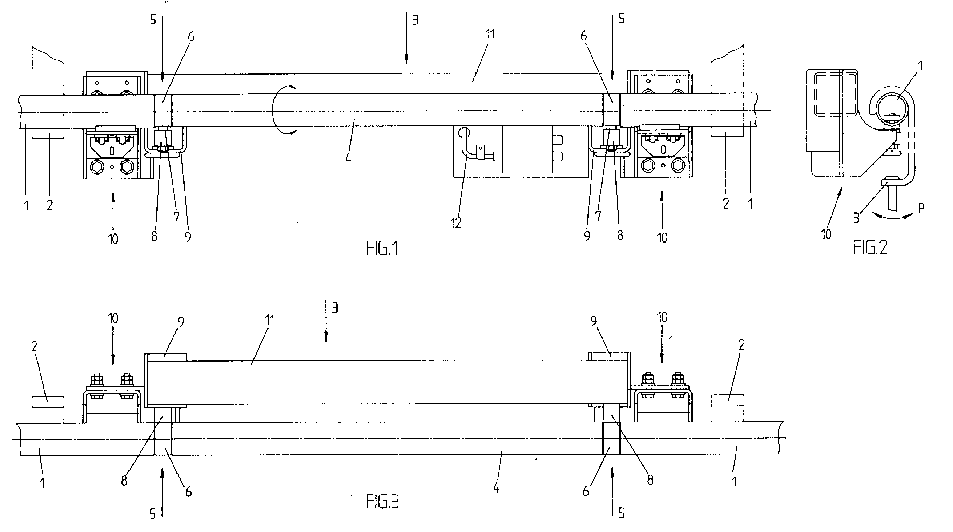

Gemäß den Zeichnungen ist eine Rohrbahn 1 mittels einer Tragkonstruktion 2 aufgehängt. Die Rohrbahn 1 dient dem Transport von Haken 3 (Fig. 2), an denen insbesondere Fleischteile von Tieren eingehakt sind.

Zwischen den beiden Enden dieser Rohrbahn 1 ist eine Hängebahnwaage 3 eingeschaltet, die es ermöglicht, das Gewicht der an den Haken 3 hängenden Fleischteile zu bestimmen. Die Hängebahnwaage 3 besitzt eine rohrförmige Wägeschiene 4, die an den beiden Enden in Pendelkugellagern 5 gelagert sind. Die feststehenden Außenringe 6 der Pendelkugellager 5 sind mittels Gewindebolzen 7 mit Wägezellen 8 verschraubt.

Die Wägezellen 8 sind auf Konsolen 9 befestigt, die unter Zwischenschaltung von Halteträgern 10 von den Enden der Rohrbahn 1 nach innen ragen. Die beiden Konsolen 9 bzw. Halteträger 10 sind über ein Trägerrohr 11 miteinander verbunden.

Die von den Wägezellen ermittelten Daten werden über eine Meßleitung 12 zu einem nicht dargestellten Anzeigegerät übertragen.

Wie sich aus der Beschreibung im Zusammenhang mit den Zeichnungen ergibt, ist die Wägeschiene 4 zufolge der Lagerung über die Pendelkugellager 5 gegenüber der Rohrbahn 1 frei drehbar. Drehmomente, die sich zufolge einer Verschwenkung der Haken 3 im Sinne des Doppelpfeiles P in Fig. 2 ergeben, werden daher nicht auf die Wägezellen 8 übertragen, die Wägeschiene 4 dreht vielmehr im gleichen Sinne mit.

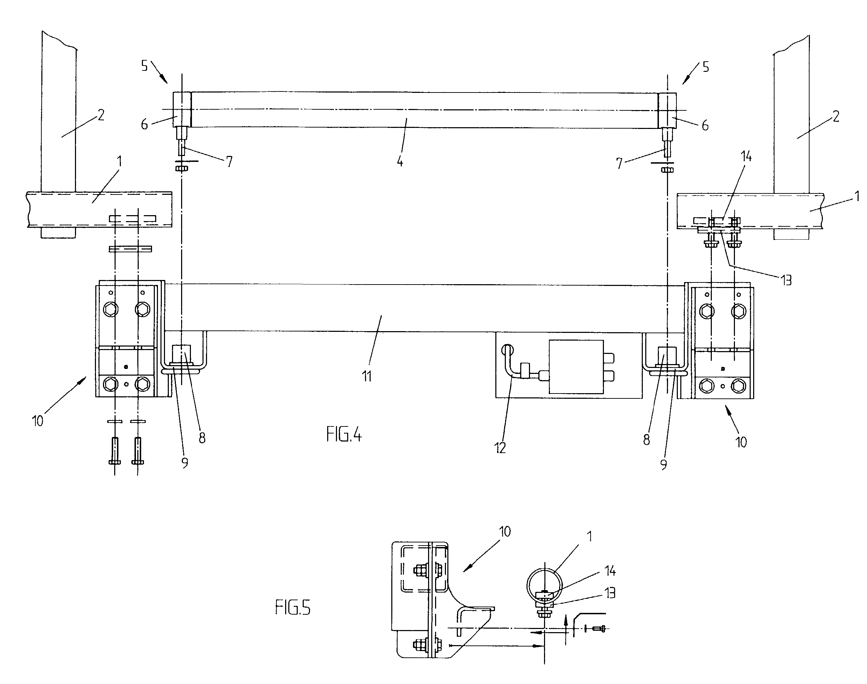

Bei der in den Fig. 4 und 5 veranschaulichten Montage wird vorerst ein der Länge der Wägeschiene 4 plus den beiden Pendelkugellagern 5 entsprechendes Stück der Rohrbahn 1 herausgeschnitten und an den beiden Rohrenden werden je zwei Bohrungen hergestellt. Zur Verminderung des Gewichtes der Hängebahnwaage 3 bei der Montage wird die Wägeschiene 4 mit den Lagern 5 durch Lösen der zu den Gewindebolzen 7 gehörenden Muttern von den Konsolen 9 entfernt.

In die Bohrungen werden Prismen 13 mit Klemmplatten 14 lose eingesetzt und das Trägerrohr 11 mit den beiden Konsolen 9 eingeschoben und befestigt (Fig. 5). Anschließend wird die Wägeschiene 4 mit den Lagern 5 wieder eingebaut und alle Waagenteile und Abstände zwischen den einzelnen Waagenteilen eingerichtet. Die Konsolen 9 lassen sich in jede Richtung verschieben, sodaß eine einfache Einrichtung möglich ist.

Nun kann die Meßleitung 12 installiert und angeschlossen werden und die erfindungsgemäße Hängebahnwaage ist gebrauchsfertig.

Im Rahmen der Erfindung sind zahlreiche Abänderungen möglich. So müssen nicht unbedingt Pendelkugellager verwendet werden, es wäre auch der Einsatz von anderen Wälzlagern und eventuell die Verwendung von Gleitlagern möglich.

## Patentansprüche

1. Hängebahnwaage, bestehend aus einer rohrförmigen Wägeschiene (4), die zwischen einer von Haken befahrbaren Rohrbahn (1) angeordnet und im Bereich ihrer Enden auf Wägezellen (8) abgestützt ist, **dadurch gekennzeichnet**, daß die Wägeschiene (4) über Lager, insbesondere Wälzlager (5) frei drehbar und antriebslos auf den Wägezellen (8) abgestützt ist.

2. Hängebahnwaage nach Anspruch 1, **dadurch gekennzeichnet,** daß die Lager Pendelkugellager (5) sind.

3. Hängebahnwaage nach Anspruch 1 oder 2, **dadurch gekennzeichnet,** daß die Wägezellen (8) auf Konsolen (9) befestigt sind, die von den beiden Enden der Rohrbahn (1) nach innen ragen.

4. Hängebahnwaage nach Anspruch 3, **dadurch gekennzeichnet,** daß die Konsolen (9) über ein Trägerrohr (11) miteinander verbunden und mit der Unterseite der Rohrbahnenden verschraubt sind.

5. Hängebahnwaage nach einem der Ansprüche 1 bis 4, **dadurch gekennzeichnet,** daß die Außenringe (6) der Wälzlager (5) mit den Wägezellen (8) verschraubt sind.
